# FASCICULE DE BREVET EUROPEEN

(11) **EP 1 061 807 B1**
(45) Date de publication et mention de la délivrance du brevet: **31.10.2001**
(21) Numéro de dépôt: 99937850.8
(22) Date de dépôt: 02.03.1999
(51) Int. Cl.: A21C 5/00, A21C 11/18

(54) **APPAREIL POUR LA DISTRIBUTION DE QUANTITES PREDETERMINEES DE PRODUITS LIQUIDES ET/OU PATEUX**
VORRICHTUNG ZUR ABGABE VON FLÜSSIGEN UND/ODER PASTÖSEN PRODUKTEN IN VORBESTIMMTEN MENGEN
APPARATUS FOR DISPENSING PREDETERMINED QUANTITIES OF LIQUID AND/OR PASTY PRODUCTS

(30) Priorité: 06.03.1998 FR 9803026
(43) Date de publication de la demande: 27.12.2000
(73) Titulaire: Sala, André, 74410 Saint-Jorioz (FR)
(72) Inventeur: Sala, André, 74410 Saint-Jorioz (FR)
(74) Mandataire: de Saint-Palais, Arnaud Marie
(86) Numéro de dépôt international: FR9900480
(87) Numéro de publication internationale: WO9944427

(56) Documents cités:
- EP-A- 0 092 305
- WO-A-95/20880
- DE-C- 4 001 082
- US-A- 3 215 062
- US-A- 4 082 033
- US-A- 4 900 241
- US-A- 5 645 195

## Description

La présente invention concerne un appareil pour la distribution de quantités prédéterminées de produits liquides et/ou pâteux ainsi qu'une installation pour la réalisation de préparations alimentaires utilisant ledit appareil.

De tels appareils sont connus de DE-4001 082-C1 et de US-A-5 645 195, qui dévoilent le préambule de la revendication 1.

Elle s'applique notamment, mais non exclusivement, à la réalisation d'installations pour la fabrication de crêpes.

D'une façon générale, on sait que pour ce type d'application, on a déjà proposé des installations faisant intervenir :
- une table de cuisson horizontale à une ou plusieurs plaques de cuisson,
- un distributeur de pâte mobile au-dessus de la table de cuisson de manière à pouvoir déposer la pâte sur la (ou les) plaque(s) de cuisson, puis être ensuite écarté de ces dernières pour permettre à l'opérateur d'exécuter toutes les manipulations (en particulier le retournement) propres à la cuisson des crêpes.

En particulier, le brevet WO95/20880, déposé au nom du Demandeur, propose un distributeur de pâte comprenant un réservoir réfrigéré dont le fond comprend un orifice de distribution commandé par un obturateur actionnable par une poignée latérale.

Cette solution s'avère particulièrement avantageuse et permet notamment d'accroître les cadences de production des crêpes en réduisant à un strict minimum le temps nécessaire au dépôt de la pâte sur les plaques de cuisson.

Néanmoins, elle présente un certain nombre d'inconvénients que l'invention se propose de supprimer :
- Elle ne permet pas de doser avec précision les quantités de pâte déposée sur la plaque : Lors du dépôt, l'opérateur se base sur une évaluation de la quantité de pâte déposée sur la plaque pour refermer l'obturateur, les temps d'ouverture devant être modifiés en permanence en fonction de la quantité de pâte restant dans l'appareil. Outre le fait que cette évaluation est imprécise, elle présente l'inconvénient de ne pas prendre en compte la quantité de pâte qui s'écoule après la fermeture de l'obturateur. Cette opération de dépôt est donc imprécise et, néanmoins, accapare toute l'attention de l'opérateur qui ne peut donc pas, en parallèle, assurer une autre tâche (par exemple la surveillance d'une autre plaque de cuisson).
- Il s'avère qu'après leur fermeture, l'obturateur et le conduit situé en aval de ce dernier laissent s'échapper des gouttes de pâte qui, du fait de la mobilité du doseur, viennent souiller la table de cuisson en différents emplacements. L'opérateur doit donc périodiquement nettoyer la table de cuisson en interrompant ainsi la cadence de production de crêpes.
- Pour ces différentes raisons, le distributeur décrit dans le brevet WO95/20880 précité ne convient pas bien dans le cas où il est associé à d'autres distributeurs du même type, par exemple pour permettre à l'opérateur un choix de la pâte, voire même la distribution d'ingrédients ou de denrées d'accompagnement telles que, par exemple, de la crème, du chocolat fondu, de la sauce ...

En vue de supprimer tous ces inconvénients, l'invention propose un appareil de distribution du type susdit comprenant :
- deux récipients superposés solidaires l'un de l'autre et communiquant l'un avec l'autre grâce à un orifice ménagé dans le fond du premier récipient, à savoir : un récipient supérieur, refermé par un couvercle, qui sert de réservoir de produit à distribuer et un récipient inférieur de plus petites dimensions, qui constitue un cylindre, dont le fond est muni d'un orifice de sortie ;
- un piston qui coulisse avec étanchéité dans ledit récipient inférieur entre une position haute d'admission et une position basse fin de course de distribution, ce piston étant traversé par au moins un orifice et étant sollicité par des premiers moyens élastiques vers sa position haute d'admission ;
- un clapet solidaire d'une tige d'actionnement du piston et mobile entre des positions d'ouverture et de fermeture dudit orifice, ce clapet étant sollicité par des seconds moyens élastiques vers sa position d'ouverture ;
- une buse de distribution en communication avec le récipient inférieur grâce à un orifice équipé d'un siège d'étanchéité contre lequel est maintenu, en position normalement fermée, un obturateur logé dans ladite buse, sous l'effet d'un ressort ; ledit obturateur, normalement fermé s'ouvrant sous l'effet de la pression du produit contenu dans le récipient inférieur lorsque s'amorce la poussée du piston et
- des moyens d'actionnement de la tige depuis l'extérieur desdits récipients, permettant d'obtenir successivement, à partir d'un état initial dans lequel le piston est en position haute d'admission, le clapet en position ouverte et l'obturateur en position fermée ;
- la fermeture du clapet puis le déplacement du piston vers sa position fin de course de distribution, avec, simultanément ouverture de l'obturateur et distribution du produit, l'immobilisation du piston en fin de course avec fermeture de l'obturateur, l'ouverture du clapet ; puis
- le retour du piston en position haute d'admission, avec, simultanément aspiration du produit contenu dans le récipient à l'intérieur du cylindre.

Avantageusement, les susdits moyens d'actionnement pourront comprendre une tige qui s'étend coaxialement à l'intérieur du récipient supérieur et dont l'extrémité supérieure passe au travers d'un orifice prévu dans le couvercle. La partie inférieure de cette tige passe au travers de deux orifices coaxiaux respectivement prévus dans ledit clapet et dans ledit piston, des moyens de butée solidaires de la tige étant prévus pour limiter la course du clapet en position haute et la course du piston en position basse. Les moyens élastiques sollicitant le clapet vers sa position d'ouverture peuvent alors consister en un ressort hélicoïdal coaxial prenant appui sur le piston, ce ressort présentant une raideur plus faible que celle des moyens élastiques sollicitant le piston vers sa position haute d'admission.

L'actionnement de la tige peut être alors assuré grâce à un levier de manoeuvre articulé par une extrémité sur le récipient supérieur et qui prend appui sur l'extrémité supérieure de la tige.

Des modes d'exécution de l'invention seront décrits ci-après, à titre d'exemples non limitatifs, avec référence aux dessins annexés dans lesquels :
Les figures 1 et 2 sont deux coupes axiales d'un appareil pour la distribution de pâte à crêpes, au repos (figure 1) et en position fin de course de distribution (figure 2) ;

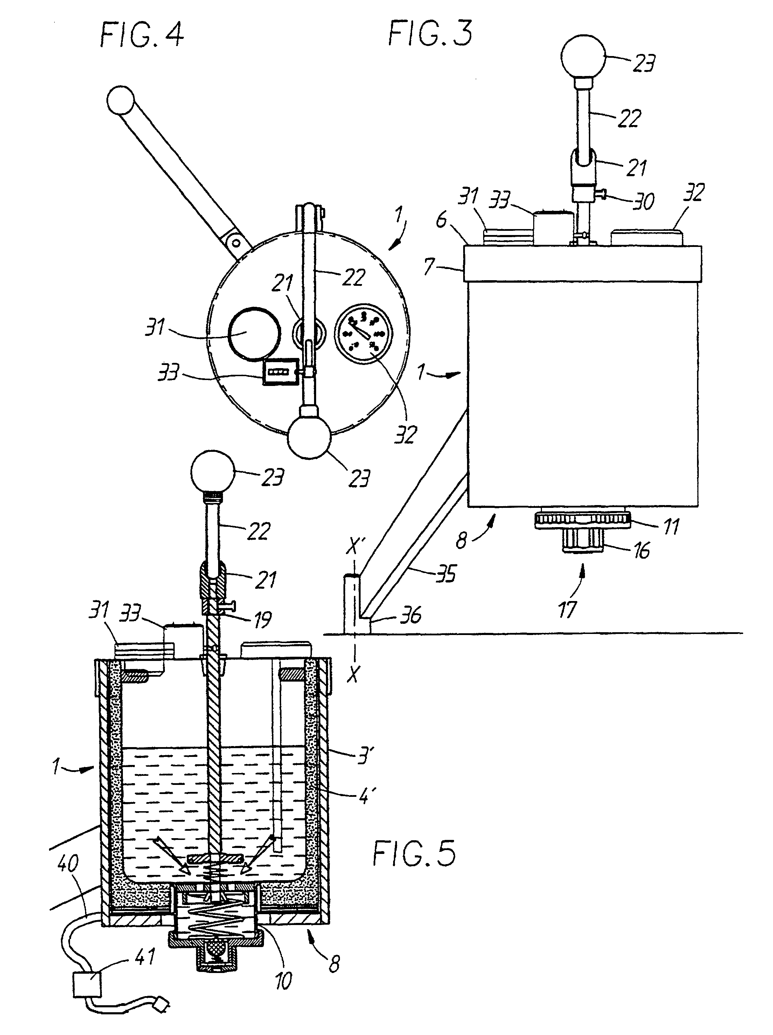

Les figures 3 et 4 représentent l'appareil en élévation (figure 3) et vu de dessus (figure 4) ;
La figure 5 est une coupe similaire à celle des figures 1 et 2, d'un appareil de distribution équipé de moyens de chauffage par bain-marie ;
La figure 6 est une représentation schématique d'une installation faisant intervenir plusieurs appareils de distribution disposés selon un montage en barillet.

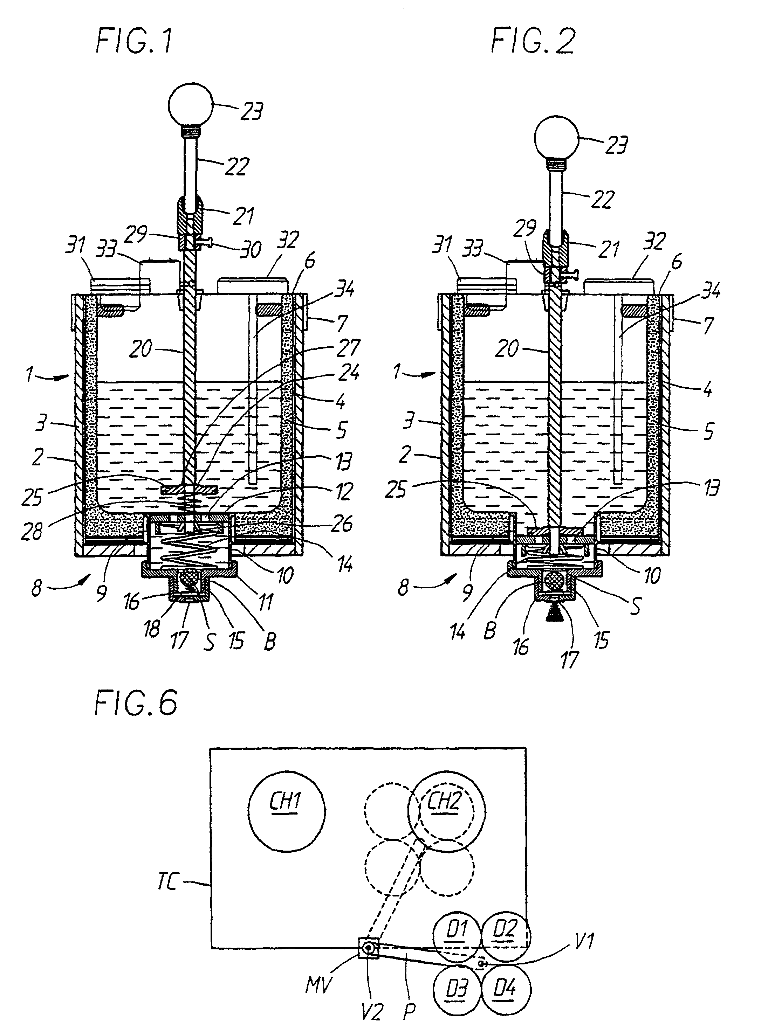

Dans l'exemple représenté sur les figures 1 et 2, l'appareil de distribution de pâte à crêpes comprend un récipient supérieur cylindrique 1 comportant :
- une paroi extérieure cylindrique 2, par exemple en aluminium ou en acier inoxydable, dont la surface intérieure est revêtue d'une couche en matière thermiquement isolante 3 telle que par exemple du caoutchouc isolant et, coaxialement à ladite paroi extérieure,
- une cuve intérieure amovible 4 à double parois qui délimitent un volume intercalaire 5 contenant une matière telle qu'un gel de refroidissement apte à stocker des frigories, cette cuve intérieure 4 étant destinée à recevoir la pâte à crêpes.

Le récipient supérieur 1 est refermé dans sa partie supérieure par un couvercle circulaire 6, par exemple en aluminium ou en acier inoxydable, dont les bords 7 viennent en retour sur la face externe de la paroi extérieure 2.

Il est refermé par un fond 8 muni d'une cavité coaxiale 9 passant au travers de la paroi extérieure 2, de la couche isolante 3 et de la cuve intérieure 4.

Dans cette cavité 9 vient partiellement s'emboîter avec étanchéité un récipient inférieur 10 cylindrique, par exemple en aluminium ou en acier inoxydable, ouvert dans sa partie supérieure, dont le fond est constitué par un bouchon support de valve 11 venant se visser sur un filetage prévu sur la paroi extérieure cylindrique dudit récipient inférieur 10.

Ce récipient inférieur 10, dont les dimensions sont très inférieures à celles du récipient supérieur 1, constitue un cylindre dans lequel coulisse avec étanchéité un piston 12, l'étanchéité est ici assurée par un joint torique qui équipe la jupe cylindrique du piston 12.

Ce piston 12, qui présente une série d'orifices ou perçages traversants 13 permettant le passage de la pâte d'un récipient 1 à l'autre 10, est sollicité par des premiers moyens élastiques (14) sous forme d'un ressort hélicoïdal logé dans le récipient inférieur 10 et prenant appui sur le bouchon 11.

Ce bouchon 11 comprend, quant à lui, un orifice central débouchant dans un manchon cylindrique coaxial 15 refermé par un écrou borgne 16 dont le fond est muni d'un orifice de sortie coaxial 17.

L'orifice central est équipé d'un siège annulaire S sur lequel peut venir en contact étanche une bille B sollicitée par un ressort hélicoïdal 18 logé dans le manchon 15 et prenant appui sur le fond de l'écrou 16.

L'actionnement du piston 12 est assuré par une tige 20 qui s'étend coaxialement au récipient 1 et dont la partie supérieure traverse le couvercle 6 et se termine au-dessus de ce dernier par une noix 21 sur laquelle vient en appui un levier 22 articulé par l'une de ses extrémités à la paroi extérieure du récipient et portant une poignée 23 à son autre extrémité.

Dans sa partie inférieure, la tige 20 présente un tronçon 24 de plus faible diamètre passant successivement au travers d'un orifice central coaxial d'un clapet circulaire 25 et d'un orifice central coaxial du piston 12.

Le clapet 25 et le piston 12 sont donc montés coulissants sur le tronçon 24. La course du piston 12 est limitée vers le bas par une butée constituée ici par un écrou à ailettes 26 venant se visser sur un filetage réalisé sur l'extrémité inférieure du tronçon 24.

La course du clapet 25 est limitée vers le haut par le décrochement 27 formé entre la tige 20 et le tronçon 24.

Le piston 12 et le clapet 25 sont sollicités vers leurs butées respectives par des seconds moyens élastiques 28 sous forme d'un ressort hélicoïdal de raideur inférieure à la raideur des premiers moyens élastiques 14.

Par ailleurs, les déplacements de la tige 20 vers le bas sont limités grâce à une butée réglable annulaire 29, mobile le long de la partie de la tige 20 qui dépasse au-dessus du couvercle 6 et qui, en fin de course vers le bas, vient en appui sur ce dernier. Le blocage en position de la butée 29 sur la tige est obtenu au moyen d'une vis pointeau 30 qui se visse dans un perçage taraudé de manière à venir en appui sur la tige 20 en assurant un blocage. La manoeuvre de cette vis 30 est assurée grâce à une tête moletée.

Le remplissage du récipient 1 s'effectue grâce à un orifice prévu dans le couvercle 6 et refermé par un bouchon 31.

Le couvercle 6 est en outre équipé d'un thermomètre 32 dont la sonde 33 plonge à l'intérieur de la cuve 4 et d'un compteur classique 34 effectuant un comptage des manoeuvres de la tige 20.

Dans cet exemple, l'appareil de distribution est monté à l'extrémité d'une potence 35 dont le support est pivoté autour d'un axe vertical XX'. L'appareil peut donc être déplacé au gré de l'opérateur, par exemple d'une plaque de cuisson à une autre.

D'une façon analogue, l'appareil de distribution pourrait être monté coulissant le long d'un rail de manière à pouvoir desservir un nombre illimité de plaques de cuisson.

### Le fonctionnement de cet appareil est alors le suivant :

Dans une phase préalable, l'opérateur ôte la cuve intérieure 5 et la place dans un congélateur pour qu'elle accumule la quantité de frigories nécessaire pour maintenir la pâte qu'elle sera amenée à contenir, à une température inférieure à un seuil déterminé. Avantageusement, cette phase préalable pourra s'effectuer la nuit.

Une fois cette phase préalable exécutée, l'opérateur réassemble l'appareil de distribution et remplit la cuve 4 de pâte grâce à l'orifice du couvercle 6.

Sous l'effet des premiers moyens élastiques 14, le piston 12 se trouve en position haute d'admission, tandis que le clapet 25 sollicité par les seconds moyens élastiques 28 est en position ouverte, en butée sur le décrochement d'alésage 27. Le piston 12 vient en outre en butée et est retenu sur l'écrou à ailettes 26. Dans cette osition, la pâte introduite dans le récipient 1 vient remplir, grâce aux orifices 13, le récipient 10. La bille B sollicitée par le ressort obture l'orifice délimité par le siège S, de sorte que la pâte demeure à l'intérieur des deux récipients 1, 10.

Lorsque l'opérateur veut déposer une dose de pâte, par exemple sur la table de cuisson, il manoeuvre le levier 22 de manière à déplacer la tige 20 vers le bas jusqu'à ce que la butée réglable 29 vienne en appui sur le couvercle 6. Bien entendu, la course de la tige 20 qui correspond à la dose de pâte déposée est réglée selon le désir de l'opérateur grâce au réglage de la position de la butée 29 sur la tige 20.

Dans une première fraction de la course de déplacement vers le bas de la tige 20, le clapet 25 est actionné par le bas jusqu'à ce qu'il vienne en contact étanche sur le piston 12 en bouchant les orifices 13. Au cours de cette première fraction de course, les seconds moyens élastiques 28 subissent un écrasement mais n'exercent pas sur le piston 12 une force suffisante pour le déplacer significativement en raison de la raideur des premiers moyens élastiques 14.

Dans une seconde fraction de course de la tige, le piston 12 est entraîné par le clapet 25 contre l'action des premiers moyens élastiques 14, les orifices 13 se trouvant obturés du fait de l'appui du clapet 25 sur le piston 12.

La pression exercée sur la pâte par le piston 12 se répercute sur la bille B qui, en comprimant le ressort 18, s'écarte de la portée S.

La pâte peut donc s'écouler par le manchon 15 et l'orifice 17, de la façon illustrée sur la figure 2. L'écoulement de la pâte cesse en même temps que cesse le déplacement de la tige 20, soit que la butée 29 est arrivée au contact du couvercle 6, soit par suite d'une interruption volontaire de l'action de l'opérateur.

Dans ce cas, la bille B qui ne subit plus la pression de la pâte est repoussée par le ressort sur la portée S. De ce fait, l'écoulement de la pâte s'interrompt tandis que la quantité de pâte demeurant dans le manchon 15 demeure prisonnière sous l'effet de la tension superficielle et de la pression atmosphérique. De ce fait, le problème résultant des gouttes de pâte tombant sur la table de cuisson au cours des manipulations de l'appareil se trouve résolu.

Lorsque l'opérateur relâche la poignée 23, le clapet 25 maintenu sur l'étagement 27 de la tige 20 par les seconds moyens élastiques 28, accompagne le mouvement de la tige 20 vers le haut. Parallèlement, le piston 12 remonte sous l'effet des premiers moyens élastiques 14 et/ou de l'écrou à ailettes 26.

Lors de sa remontée, le clapet se trouve soulevé par les seconds moyens élastiques 28, la pâte contenue dans le récipient se trouve aspirée dans le récipient inférieur, à travers les orifices 13.

En fin de course d'admission (position illustrée figure 1), le récipient 10 est à nouveau rempli de pâte et l'appareil est prêt pour une nouvelle manoeuvre.

Grâce à la matière contenue dans la cuve intérieure amovible, la pâte contenue dans le récipient 1 demeure dans une plage de température prédéterminée garantissant sa conservation.

L'invention ne se limite pas au mode d'exécution précédemment décrit, ainsi, dans le cas où le produit à distribuer doit demeurer à une température supérieure à la température ambiante, ce qui est le cas, par exemple, du chocolat fondu, la couche en matière isolante 3 pourra être remplacée par une couche incluant des moyens de chauffage et/ou de maintien à une température supérieure à la température ambiante.

Ainsi, dans l'exemple représenté sur la figure 5, la couche 3 a été remplacée par une couche 3' en caoutchouc chauffant alimentée par un circuit d'alimentation électrique 40 connectable au secteur et incluant un thermostat 41. Dans ce cas, il est possible d'utiliser une cuve 4' similaire à la cuve 4, le gel jouant alors, d'une façon surprenante, le rôle d'un bain-marie.

Un avantage important des appareils précédemment décrits consiste en ce qu'en raison de leur aptitude à délivrer des produits froids ou chauds et de leur ergonomie, ils s'intègrent à des installations telles que celle représentée schématiquement figure 6 qui comprend quatre distributeurs D₁ à D₄ assemblés côte à côte à la façon d'un barillet. Cet ensemble de distributeurs D₁ à D₄ est monté pivotant autour d'un axe vertical V₁ à l'extrémité d'une potence P dont l'autre extrémité pivote autour d'un axe vertical V₂ porté par une structure fixe telle que, par exemple, un montant vertical MV de manière à pouvoir se déplacer au-dessus d'une table de cuisson TC comprenant ici deux plaques chauffantes CH₁, CH₂.

Les pivoteries prévues aux extrémités de la potence P peuvent comprendre un système de crantage facilitant le centrage des distributeurs D₁ à D₄ sur les plaques chauffantes CH₁, CH₂.

Grâce à ces dispositions, l'opérateur peut effectuer un choix entre plusieurs compositions de pâtes (par exemple au froment ou au sarrasin) et/ou plusieurs sortes de garnitures (chocolat fondu, crème).

Ce résultat est obtenu avec une capacité de production accrue (possibilité d'accroissement des cadences de production) et avec une meilleure qualité des produits (homogénéité de la production, hygiène).

Bien entendu, dans une version industrielle, l'appareil pourra comprendre un actionneur hydraulique ou pneumatique pour la commande des déplacements de la tige des distributeurs.

De même, les ensembles de distributeurs pourront être montés coulissants le long d'un rail de manière à pouvoir être déplacés au-dessus d'un nombre indéterminé de plaques chauffantes.

## Revendications

1. Appareil pour la distribution de quantités prédéterminées de produits liquides et/ou pâteux,
**caractérisé en ce qu'**il comprend :
a) - deux récipients superposés solidaires l'un de l'autre et communiquant l'un avec l'autre grâce à un orifice ménagé dans le fond du premier récipient, à savoir : un récipient supérieur (1) , refermé par un couvercle (6), qui sert de réservoir de produit à distribuer et un récipient inférieur (10) de plus petites dimensions, qui constitue un cylindre, dont le fond est muni d'un orifice de sortie ;
b) - un piston (12) qui coulisse avec étanchéité dans ledit récipient inférieur (10) entre une position haute d'admission et une position basse fin de course de distribution, ce piston (12) étant traversé par au moins un orifice (13) et étant sollicité par des premiers moyens élastiques (14) vers sa position haute d'admission ;
**caractérisé en ce qu'**il comprend
c) - un clapet (25) solidaire d'une tige d'actionnement du piston (20) et mobile entre des positions d'ouverture et de fermeture dudit orifice (13), ce clapet (25) étant sollicité par des seconds moyens élastiques (28) vers sa position d'ouverture ;
d) - une buse de distribution en communication avec le récipient inférieur (10) grâce à un orifice équipé d'un siège d'étanchéité (5) contre lequel est maintenu, en position normalement fermée, un obturateur (B) logé dans ladite buse, sous l'effet d'un ressort (18); ledit obturateur (B), normalement fermé s'ouvrant sous l'effet de la pression du produit contenu dans le récipient inférieur (10) lorsque s'amorce la poussée du piston (12) et
e) - des moyens d'actionnement de la tige (20) depuis l'extérieur desdits récipients (1;10), permettant d'obtenir successivement, à partir d'un état initial dans lequel le piston est en position haute d'admission, le clapet (25) en position ouverte et l'obturateur (B) en position fermée ;
- la fermeture du clapet (25) puis le déplacement du piston (12) vers sa position fin de course de distribution, avec, simultanément ouverture de l'obturateur (B) et distribution du produit, l'immobilisation du piston (12) en fin de course avec fermeture de l'obturateur (B), l'ouverture du clapet (25) ; puis
- le retour du piston (12) en position haute d'admission, avec, simultanément l'aspiration du produit contenu dans le récipient (1) à l'intérieur du cylindre (10).

2. Appareil selon la revendication 1,
**caractérisé en ce que** les susdits moyens d'actionnement comprennent une tige (20) qui s'étend coaxialement à l'intérieur du récipient supérieur (1) et dont l'extrémité supérieure passe au travers d'un orifice prévu dans le couvercle (6).

3. Appareil selon la revendication 2,
**caractérisé en ce que** la partie inférieure de ladite tige (20) passe au travers de deux orifices coaxiaux respectivement prévus dans ledit clapet (25) et dans ledit piston (12), des moyens de butée solidaires de la tige étant prévus pour limiter la course du clapet (25) en position haute et la course du piston (12) en position basse.

4. Appareil selon l'une des revendications précédentes,
**caractérisé en ce que** les seconds moyens élastiques (28) sollicitant le clapet vers sa position d'ouverture consistent en un ressort hélicoïdal coaxial prenant appui sur le piston (12), ce ressort présentant une raideur plus faible que celle des premiers moyens élastiques (14) sollicitant le piston (12) vers sa position haute d'admission.

5. Appareil selon l'une des revendications 2 à 4,
**caractérisé en ce que** l'actionnement de la tige (20) est alors assuré grâce à un levier de manoeuvre (22) articulé par une extrémité sur le récipient supérieur et qui prend appui sur l'extrémité supérieure de la tige (20).

6. Appareil selon l'une des revendications précédentes,
**caractérisé en ce que** le susdit récipient supérieur (1) comprend une paroi extérieure cylindrique (2) renfermant une cuve intérieure amovible (4) à double parois délimitant un volume intercalaire (5) contenant une matière telle qu'un gel de refroidissement.

7. Appareil selon la revendication 6,
**caractérisé en ce que** la susdite paroi extérieure (2) présente une surface intérieure revêtue d'une couche en matière thermiquement isolante (3) telle que du caoutchouc isolant.

8. Appareil selon la revendication 6,
**caractérisé en ce que** la susdite paroi extérieure (2) présente une surface intérieure revêtue d'une couche incorporant des moyens de chauffage alimentés par un circuit d'alimentation en courant électrique incluant un thermostat, la matière contenue entre les deux parois de la cuve intérieure (4) jouant le rôle d'un bain-marie.

9. Appareil selon l'une des revendications 6 à 8,
**caractérisé en ce que** la matière contenue entre les deux parois de la cuve intérieure (4) amovible est un gel de refroidissement, ce gel étant utilisé soit pour stockage des frigories, soit pour la réalisation d'un bain-marie.

10. Appareil selon l'une des revendications précédentes,
**caractérisé en ce que** le fond du récipient inférieur (10) est constitué par un bouchon support de valve (11) sur lequel prend appui un ressort constituant les susdits premiers moyens élastiques (14).

11. Appareil selon la revendication 10,
**caractérisé en ce que** le susdit bouchon (11) comprend un orifice central débouchant dans un manchon cylindrique coaxial (15) refermé par un écrou borgne (16) dont le fond est muni d'un orifice de sortie coaxial (17), ledit orifice central étant équipé d'un siège annulaire (S) sur lequel peut venir en contact étanche une bille (B) sollicitée par un ressort hélicoïdal (18) logé dans le manchon (15) et prenant appui sur le fond de l'écrou (16).

12. Appareil selon l'une des revendications 2 à 11,
**caractérisé en ce que** les déplacements de la tige vers le bas sont limités grâce à une butée annulaire réglable (29) mobile le long de la partie de la tige (20) qui dépasse au-dessus du couvercle (6) et qui, en fin de course vers le bas, vient en appui sur ce dernier.

13. Appareil selon l'une des revendications précédentes,
**caractérisé en ce que** le susdit couvercle comprend un orifice de remplissage refermé par un bouchon ainsi qu'un thermomètre et/ou un compteur (34) effectuant un comptage des manoeuvres de la tige (20).

14. Installation pour la fabrication de crêpes ou analogue,
**caractérisée en ce qu'**elle comprend un ensemble d'appareils de distribution (D₁, à D₄) selon l'une des revendications précédentes, assemblés côte à côte à la façon d'un barillet, cet ensemble étant monté pivotant autour d'un axe vertical (V₁) à l'extrémité d'une potence (P) dont l'autre extrémité pivote autour d'un axe vertical (V₂) fixé de manière à pouvoir se déplacer au-dessus d'un dispositif de cuisson (TC) comprenant une ou plusieurs plaques chauffantes (CH₁, CH₂).

15. Installation pour la fabrication de crêpes ou analogue,
**caractérisée en ce qu'**elle comprend un ensemble d'appareils de distribution (D₁ à D₄) selon l'une des revendications 1 à 13, assemblés côte à côte à la façon d'un barillet, cet ensemble étant monté coulissant sur un rail, de manière à se déplacer au-dessus d'un dispositif de cuisson comprenant une ou plusieurs plaques chauffantes (CH₁, CH₂).

## Patentansprüche

1. Gerät für die Abgabe von festgelegten Mengen von flüssigen und/oder zähflüssigen Produkten,
**dadurch gekennzeichnet, dass** es folgendes beinhaltet:
a) - zwei übereinander liegende Gefäße, die fest miteinander verbunden sind und anhand einer Öffnung im Boden des ersten Gefäßes miteinander kommunizieren, d.h.: ein oberes Gefäß (1), das anhand eines Deckels (6) verschlossen ist und als Reservoir für das abzugebende Produkt dient, und ein unterer, kleinerer Behälter (10), der einen Zylinder bildet, dessen Boden mit einer Auslassöffnung versehen ist;
b) - einen Kolben (12), der sich mit Dichtung in dem genannten unteren Behälter (10) bewegt und zwar zwischen einer oberen Einlassposition und einer unteren Abgabeposition, wobei dieser Kolben (12) von mindestens einer Öffnung (13) durchquert wird und anhand erster elastischen Mittel (14) in Richtung auf seine obere Einlassposition gedrückt wird;
**dadurch gekennzeichnet, dass** er folgendes beinhaltet:
c) - eine Klappe (25), die fest mit einem Stab (20) für die Betätigung des Kolbens verbunden ist und sich zwischen Öffnungs- und Verschlusspositionen der genannten Öffnung (13) bewegen kann, wobei diese Klappe (25) anhand zweiter elastischer Mittel (28) in Richtung auf seine Öffnungsposition gedrückt wird;
d) - eine Abgabedüse, die mit dem unteren Behälter (10) kommuniziert, dank einer Öffnung mit einem Dichtungssitz (5), gegen den in normalerweise verschlossener Position unter Einwirkung einer Feder (18) ein Verschlussdeckel (B) gedrückt wird, der in der genannten Düse sitzt, wobei sich der genannte Deckel (B), der normalerweise verschlossen ist, unter Einwirkung des Drucks des Produkts öffnet, das im unteren Behälter (10) enthalten ist, wenn der Druck des Kolbens (12) ausgelöst wird, und
e) - Mittel für die Betätigung des Stabs (20) von außerhalb der genannten Behälter (1; 10) aus, mit denen sich nach und nach von einem anfänglichen Zustand aus, bei dem sich der Kolben in der oberen Einlassposition befindet, die Klappe (25) in geöffnete Position und der Verschlussdeckel (B) in geschlossene Position bringen lässt;
- mit Schließung der Klappe (25) und sodann Bewegung des Kolbens (12) in Richtung auf seine Abgabeposition mit gleichzeitiger Öffnung des Verschlussdeckels (B) und Abgabe des Produkts, Stillstand des Kolbens (12) in Endposition mit Schließung des Verschlussdeckels (B), Öffnung der Klappe (25) und sodann
- Rückkehr des Kolbens (12) in seine obere Einlassposition mit gleichzeitiger Ansaugung des Produkts, das im Behälter (1) enthalten ist, in das Innere des Zylinders (10).

2. Gerät gemäß Patentanspruch 1,
**dadurch gekennzeichnet, dass** die oben genannten Betätigungsmittel einen Stab (20) beinhalten, der sich koaxial innerhalb des oberen Behälters (1) erstreckt und dessen oberes Ende eine Öffnung durchquert, die im Deckel (6) eingerichtet ist.

3. Gerät gemäß Patentanspruch 2,
**dadurch gekennzeichnet, dass** der untere Teil des genannten Stabs (20) zwei koaxiale Öffnungen durchquert, die jeweils in der genannten Klappe (25) und in dem genannten Kolben (12) eingerichtet sind, wobei fest mit dem Stab verbundene Anschläge eingerichtet sind, um den Arbeitsweg der Klappe (25) in oberer Position und den Arbeitsweg des Kolbens (12) in unterer Position zu begrenzen.

4. Gerät gemäß einem der vorangegangenen Patentansprüche,
**dadurch gekennzeichnet, dass** die zweiten elastischen Mittel (28), die die Klappe in ihre Öffnungsposition drücken, aus einer koaxial angeordneten Spiralfeder bestehen, die am Kolben (12) ansitzt, wobei diese Feder eine geringere Steifigkeit aufweist, als diejenige der ersten elastischen Mittel (14), die den Kolben (12) in seine obere Einlassposition drücken.

5. Gerät gemäß einem der Patentansprüche 2 bis 4,
**dadurch gekennzeichnet, dass** die Betätigung des Stabes (20) sodann dank eines Bedienhebels (22) gewährleistet wird, der an einem Ende gelenkig auf dem oberen. Behälter gelagert ist und auf dem oberen Ende des Stabes (20) aufliegt.

6. Gerät gemäß einem der vorangegangenen Patentansprüche,
**dadurch gekennzeichnet, dass** der genannte obere Behälter (1) eine zylinderförmige Außenwand (2) aufweist, die einen herausnehmbaren Innenbehälter (4) umschließt, der eine Doppelwand besitzt, die einen Zwischenraum (5) begrenzt, der einen Stoff, wie z.B. ein Kühlgel enthält.

7. Gerät gemäß Patentanspruch 6,
**dadurch gekennzeichnet, dass** die genannte Außenwand (2) eine Innenseite besitzt, die mit einer Schicht aus wärmeisolierendem Stoff (3) beschichtet ist, wie z.B. isolierendem Gummi.

8. Gerät gemäß Patentanspruch 6,
**dadurch gekennzeichnet, dass** die genannte Außenwand (2) eine Innenseite besitzt, die mit einer Schicht verkleidet ist, die Heizmittel enthält, die anhand eines Stromkreises mit Thermostat versorgt werden, wobei der Stoff, der zwischen den beiden Wandungen des Innenbehälters (4) die Rolle eines Bain-Marie spielt.

9. Gerät gemäß einem der Patentansprüche 6 bis 8,
**dadurch gekennzeichnet, dass** der Stoff, der zwischen den beiden Wandungen des herausnehmbaren Innenbehälters (4) enthalten ist, ein Kühlgel ist, wobei dieses Kühlgel für die Speicherung von Kalorien zum Kühlen oder Erwärmen (Bain-Marie) verwendet wird.

10. Gerät gemäß einem der vorangegangenen Patentansprüche,
**dadurch gekennzeichnet, dass** der Boden des unteren Behälters (10) aus einem Ventilstopfen (11) besteht, auf dem eine Feder aufliegt, die das oben genannte erste elastische Mittel (14) darstellt.

11. Gerät gemäß Patentanspruch 10,
**dadurch gekennzeichnet, dass** der oben genannte Stopfen (11) eine zentrale Öffnung besitzt, die in einer koaxial angeordneten, zylinderförmigen Manschette (15) mündet, die anhand einer Hutmutter (16) verschlossen ist, deren Boden mit einer Öffnung mit koaxial angeordnetem Ausgang (17) versehen ist, wobei die genannte zentrale Öffnung mit einem ringförmigen Sitz (S) ausgerüstet ist, mit dem eine Kugel (B) in dichten Kontakt treten kann, die dem Druck einer Spiralfeder (18) ausgesetzt ist, die in der Manschette (15) untergebracht ist und auf dem Boden der Mutter (16) aufliegt.

12. Gerät gemäß einem der Patentansprüche 2 bis 11,
**dadurch gekennzeichnet, dass** die Bewegungen des Stabes nach unten dank eines einstellbaren ringförmigen Anschlags (29) begrenzt werden, der entlang desjenigen Teils des Stabes (20) beweglich ist, der über den Deckel (6) hinausragt und der am unteren Ende des Arbeitsweges auf diesem Deckel aufliegt.

13. Gerät gemäß einem der vorangegangenen Patentansprüche,
**dadurch gekennzeichnet, dass** der oben genannte Deckel eine Füllöffnung besitzt, die anhand eines Stopfens verschlossen ist, sowie ein Thermometer und/oder einen Zähler (34), der eine Zählung der Bewegungen des Stabes (29) vornimmt.

14. Anlage für die Herstellung von Crêpes oder analogen Erzeugnissen,
**dadurch gekennzeichnet, dass** sie eine Reihe von Abgabegeräten (D1 bis D4) beinhaltet, die einem der oben genannten Patentansprüche entsprechen und die nebeneinander in Form einer Trommel angeordnet sind, wobei diese Vorrichtung um eine senkrechte Achse (V1) herum rotiert und zwar am Ende eines Pfostens (P), dessen anderes Ende um eine senkrechte Achse (V2) herum rotiert, die so befestigt ist, dass sie sich über einer Garvorrichtung (TC) bewegen kann, die eine oder mehrere Heizplatten (CH1, CH2) beinhaltet.

15. Anlage für die Herstellung von Crêpes oder analogen Erzeugnissen,
**dadurch gekennzeichnet, dass** sie eine Reihe von Abgabegeräten (D1 bis D4) beinhaltet, die einem der Patentansprüche 1 bis 13 entsprechen und nebeneinander in Form einer Trommel angeordnet sind, wobei diese Vorrichtung verschiebbar auf einer Schiene montiert ist, so dass sie sich über einer Garvorrichtung bewegen kann, die eine oder mehrere Heizplatten (CH1, CH2) beinhaltet.

## Claims

1. Device for distributing predetermined quantities of liquid and/or pasty products, this device including :
a) two solidary superimposed receptacles integral with each other and communicating with each other via an orifice fitted at the bottom of the first receptacle, namely : an upper receptacle (1) closed by a cover (6) and used as a tank for the product to be distributed, and a lower smaller receptacle (10) constituting a cylinder whose bottom is provided with an outlet;
b) a piston (12) which slides sealed inside said lower receptacle (10) between an upper intake position and a bottom distribution end of travel position, this piston (12) being traversed by at least one orifice (13) and stressed by first elastic means (14) towards its upper intake position, **characterised in that** it includes :
c) a clack valve (25) integral with a rod (20) for activating the piston and mobile between the opening and closing positions of said orifice (13), this clack valve (25) being stressed by second elastic means (28) towards its opening position ;
d) a distribution nozzle in communication with the lower receptacle (10) by means of a hole equipped with waterproof seat (5) against which is maintained, in position normally closed, an obturator (8) housed in said nozzle, under spring effect (18); said obturator (8), normally closed, opening under effect from product pressure contained in the lower receptacle (10) when starts the piston push; and
e) means for activating the rod (20) from outside said receptacles (1, 10) making it possible to successively obtain from an initial state where the piston is in the upper intake position, the clack valve (25) in its open position and the obturator (B) in its closed position;
• the closing of the clack valve (25) then the movement of the piston (12) towards its distribution end of travel position with at the same time opening of the obturator (B) and distribution of the product, immobilisation of the piston (12) at the end of travel with closing of the obturator (B), opening of the clack valve (25), then
• the return on the piston (12) into its upper intake position with simultaneously sucking up of the product contained in the receptacle (1) inside the cylinder (10).

2. Device according to claim 1,
**characterised in that** said activation means include a rod (20) extending coaxially inside the upper receptacle (1) and whose upper extremity passes through an orifice provided in the cover (6).

3. Device according to claim 2,
**characterised in that** the lower portion of said rod (20) passes through two coaxial orifices respectively provided in said clack valve (25) and in said piston (12), stop means integral with the rod being provided so as to limit the travel of the clack valve (25) in the upper position and the travel of the piston (12) in the lower position.

4. Device according to one of the preceding claims,
**characterised in that** the second elastic means (28) stressing the clack valve towards its opening position consist of a coaxial helical spring taking support on the piston (12), this spring having a stiffness weaker than that of the first elastic means (14) stressing the piston (12) towards its upper intake position.

5. Device according to claim 2,
**characterised in that** the activation of the rod (20) is then ensured via a control lever (22) joined by one extremity to the upper receptacle and which takes support on the upper extremity of the rod (20).

6. Device according to one of the preceding claims,
**characterised in that** said upper receptacle (1) includes an external cylindrical wall (2) containing a movable internal tank (4) with double walls delimiting an inserted volume (5) containing a material such as a cooling gel.

7. Device according to claim 6,
**characterised in that** said external wall (2) has an internal surface coated with a layer of a thermically nonconducting material (3) such as insulating rubber.

8. Device according to claim 6,
**characterised in that** said external wall (2) has an internal surface coated with a layer incorporating heating means fed by a feed circuit with electric power including a thermostat, the material contained between the two walls of the internal tank (4) playing the role of a water bath.

9. Device according to claim 6,
**characterised in that** the material contained between the two walls of the movable internal tank (4) is a cooling gel, this gel being used to either store kilogram calories or for embodying a water bath.

10. Device according to one of the preceding claims,
**characterised in that** the bottom of the lower receptacle (10) is constituted by a glass support stopper (11) on which a spring takes support, said spring constituting said first elastic means (14).

11. Device according to claim 10,
**characterised in that** said stopper (11) includes a central orifice opening into a coaxial cylindrical sleeve (15) closed by a dummy nut (16) whose bottom is fitted with a coaxial outlet (17) said central orifice being equipped with an annular seat (S) on which a ball (B), stressed by a helical spring (18) housed in the sleeve (15) and taking support on the bottom of the nut (16), is able to come into sealed contact.

12. Device according to claim 2,
**characterised in that** the movements of the rod downwards are limited by an adjustable annular stop (29) mobile along the portion of the rod (20) which projects above the cover (6) and which at the end of travel towards the bottom comes into support on the latter.

13. Device according to one of the preceding claims,
**characterised in that** said cover includes a filling orifice closed by a stopper, as well as a thermometer and/or counting device (34) counting the manoeuvres of the rod (20).

14. Installation for producing pancakes or similar products,
**characterised in that** it includes a set of distribution devices (D₁ to D₄) according to one of the preceding claims assembled side by side in the way of a barrel, this set being mounted pivoting around a vertical axis (V₁) at the extremity of a bracket (P) whose other extremity pivots around a fixed vertical axis (V₂) so as to be able to move above a cooking device (TC) including one or several heating plates (CH₁, CH₂).

15. Installation for producing pancakes or similar products,
**characterised in that** it includes a set of distribution devices (D₁ to D₄) according to one of the claims 1 to 13 assembled side by side in the way of a barrel, this set being mounted sliding on a rail so as to move above a cooking device including one or several heating plates (CH₁, CH₂).
